# FASCICULE DE BREVET EUROPEEN

(11) **EP 0 832 550 B1**
(45) Date de publication et mention de la délivrance du brevet: **02.05.2002**
(21) Numéro de dépôt: 97401894.7
(22) Date de dépôt: 06.08.1997
(51) Int. Cl.: A01D 46/28

(54) **Secoueur pour machine à vendanger ou à récolter des fruits ou des baies par secouage et moule pour la fabrication d'un tel secoueur**
Schüttler für eine Traubenerntemaschine oder für eine Obst- oder Beerenerntemaschine und Form für diese Herstellung
Shaker for a vintaging machine, or a fruit or berry harvesting machine and mould for its manufacture

(30) Priorité: 27.08.1996 FR 9610496
(43) Date de publication de la demande: 01.04.1998
(73) Titulaire: ETABLISSEMENTS GREGOIRE S.A., 16100 Cognac (FR)
(72) Inventeur: Gregoire, James, 16100 Cognac (FR)
(74) Mandataire: Breesé, Pierre

(56) Documents cités:
- EP-A- 0 425 353
- FR-A- 2 436 553
- FR-A- 2 554 672
- FR-A- 2 635 943
- FR-A- 2 654 575
- US-A- 3 911 653
- US-A- 5 291 726

## Description

La présente invention concerne un secoueur pour machine à vendanger ou à récolter des fruits ou des baies par secouage et un moule pour la fabrication d'un tel secoueur.

De tels secoueurs sont destinés à des machines à vendanger et plus généralement à des machines pour la récolte de fruits ou de baies (cassis, olives, etc.) par secouage.

Les secoueurs pour machines à vendanger sont habituellement formés par une tige en matière plastique maintenue à l'une de ses extrémités par une bride de liaison avec un support oscillant autour d'un axe perpendiculaire au plan contenant la tige. Généralement, ces secoueurs sont réalisés à partir de tiges de matières plastiques rigides, par exemple de l'ERTALON (marque commerciale).

On distingue différentes variantes de secoueurs. Certains secoueurs sont recourbés en forme d'épingle à cheveu. D'autres types de secoueurs sont formés par une tige simple, dont l'extrémité opposée au support oscillant est libre, ou au contraire reliés à un autre support fixe ou oscillant par une bielle ou une pièce de liaison.

Un premier inconvénient de tels secoueurs est que la partie située au niveau de la fin de la bride de liaison est soumise à des contraintes mécaniques importantes, pouvant entraîner la rupture. Au niveau de cette partie, on passe en effet brusquement d'une zone très rigide où le secoueur est enserré dans la bride à une zone moins rigide où le secoueur est libre. Il se produit des effets de cisaillements provoquant un échauffement significatif de cette partie, ce qui fragilise le secoueur. Ce phénomène est particulièrement préjudiciable au début des vendanges, lorsque la maturité des raisins n'est pas encore maximale, et nécessite le réglage des machines à vendanger à des fréquences de secouage élevées.

Un autre inconvénient concerne plus spécifiquement les secoueurs à extrémité libre ou à tige droite dont l'extrémité arrière est reliée à un support par une biellette.

Pour de ce type de secoueurs, il est usuel d'employer une bride de fixation prolongée par un manchon présentant une surface d'appui concave, afin de provoquer un enroulement partiel du tronçon de la tige situé en arrière de la bride de maintien. Cet enroulement partiel est destiné à modifier continûment la fréquence propre du secoueur et éviter l'entrée en résonance.

L'invention a pour but de remédier à ces inconvénients. A cet effet, elle concerne des secoueurs conforme à la revendication 1.

Selon un mode de réalisation particulier, la section du tronçon intermédiaire varie entre une section maximale d'environ 50 millimètres et une section minimale d'environ 20 millimètres.

Selon un autre mode de réalisation particulier, la longueur du tronçon intermédiaire est comprise entre 10 et 50 centimètres.

Dans l'art antérieur, les secoueurs sont fabriqués par déformation d'une tige cylindrique. Ce procédé de fabrication présente un inconvénient pour les secoueurs recourbés en épingle à cheveu. En effet, le matériau présente un effet de mémoire de forme, qui tend à modifier la courbure initiale du secoueur.

L'invention concerne encore un moule pour la fabrication d'un secoueur selon la revendication 1.

L'invention sera mieux comprise à la lecture de la description qui suit, faisant référence aux figures annexées relatives à des exemples non limitatifs de réalisation où :
- la figure 1 représente une vue de dessus d'un secoueur selon l'invention ;
- la figure 2 représente une variante de réalisation d'un tel secoueur.

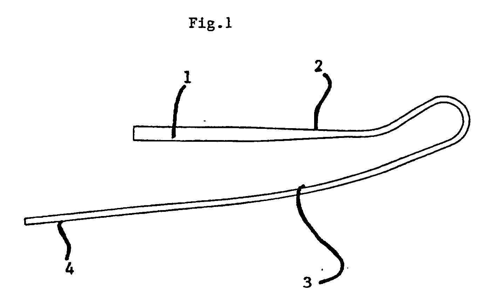

La figure 1 représente une vue de dessus d'un secoueur selon une première variante de l'invention. Le secoueur présente un premier tronçon (1) de forme cylindrique et de section constante. Ce premier tronçon est destiné à être maintenu par une bride de serrage formé de deux demi-coquilles présentant une section intérieure complémentaire.

A titre d'exemple, la section de ce premier tronçon (1) est circulaire et présente un diamètre de 35 millimètres.

Ce premier tronçon (1) est prolongé par un tronçon intermédiaire (2) dont la section décroît depuis une section identique à celle du premier tronçon (1), jusqu'à une section identique à celle de la tige (3). La longueur de ce tronçon intermédiaire (2) est d'environ 25 centimètres.

Le tronçon intermédiaire réalise dans cette variante deux fonctions :
Il renforce la zone particulièrement sollicitée du secoueur et il fait évoluer progressivement la rigidité du secoueur, ce qui crée des harmoniques vibratoires limitant les phénomènes de résonance.
Un tel secoueur peut être réalisé par usinage d'une tige cylindrique, ou par moulage.

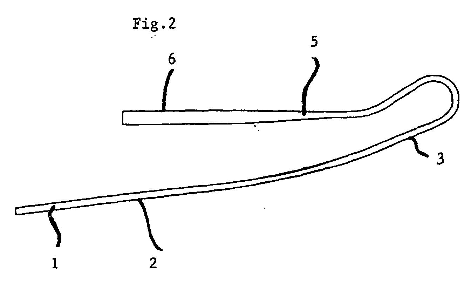

La figure 2 représente une variante de réalisation d'un tel secoueur.
Le secoueur en épingle à cheveu est destiné à être fixé par ses deux extrémités sur des supports. La zone centrale (3) est prolongée de part et d'autre par des tronçons intermédiaires (2, 5) de section croissante en direction opposée de la zone centrale (3). Ces tronçons intermédiaires (2, 5) sont eux-mêmes prolongés par des tronçons terminaux (1, 6) cylindriques destinés au serrage par des brides de fixation.

## Revendications

1. Secoueur pour machine à vendanger ou à recolter des fruits ou des baies par secouage, formé par une tige en matière plastique maintenue à l'une de ses extrémités au moins par une bride de liaison avec un support oscillant autour d'un axe perpendiculaire au plan contenant la tige, **caracterisé en ce que** la tige présente un tronçon intermédiaire (2) de section décroissante, compris entre un premier tronçon (1) de section constante propre à être enserré dans la bride de fixation, et un tronçon recourbé en épingle à cheveu.

2. Secoueur selon la revendication 1 **caracterisé en ce que** la longueur du tronçon intermédiaire (2) est comprise entre 10 et 50 centimètres.

3. Secoueur selon la revendication 1 ou 2 **caracterisé en ce que** la section du tronçon intermédiaire (2) varie entre une section maximale d'environ 50 millimètres et une section minimale d'environ 20 millimètres.

4. Secoueur pour machine à vendanger ou à récolter des fruits ou des baies par secouage selon la revendication précédente, **caractérisé en ce que** la tige recourbée en épingle à cheveu se prolonge par un second tronçon intermédiaire (5) de section décroissante.

5. Moule pour la fabrication d'un secoueur pour machine à vendanger ou à récolter des fruits ou des baies par secouage présentant une empreinte pour former un secoueur selon la revendication 1, présentant un premier tronçon, un tronçon intermédiaire de section variable et un tronçon recourbé en épingle à cheveu.

## Patentansprüche

1. Rüttler für Erntemaschine oder Obstpflückmaschine oder für Rüttelgestelle, welcher durch einen Stab aus Kunststoffmaterial gebildet wird, der wenigstens an einem seiner Enden durch einen Verbindungsriegel an einer Pendelstütze gehalten wird, die um eine senkrecht zur Stabebene verlaufenden Achse schwingt, **dadurch gekennzeichnet dass** der Stab einen Zwischenabschnitt (2) mit abnehmendem Querschnitt aufweist, der zwischen einem ersten Abschnitt (1) mit gleichbleibendem Querschnitt, welcher geeignet ist, in den Befestigungsriegel eingespannt zu werden, und einem in Haarnadelform gebogenen Abschnitt angeordnet ist.

2. Rüttler nach Anspruch 1, **dadurch gekennzeichnet, dass** die Länge des Zwischenabschnitts (2) 10 bis 50 Zentimeter beträgt.

3. Rüttler nach Anspruch 1 oder 2, **dadurch gekennzeichnet, dass** der Querschnitt des Zwischenabschnitts (2) von höchstens etwa 50 Millimetern bis zu mindestens etwa 20 Millimetern variiert.

4. Rüttler für eine Erntemaschine oder Obstpflückmaschine oder für Rüttelgestelle nach vorgenanntem Anspruch, **dadurch gekennzeichnet, dass** der in Haarnadelform gebogene Stab durch einen zweiten Zwischenabschnitt (5) mit abnehmendem Querschnitt verlängert wird.

5. Spritzform für die Herstellung eines Rüttlers für eine Erntemaschine oder Obstpflückmaschine oder für Rüttelgestelle, die eine Einarbeitung aufweist, um einen Rüttler nach Anspruch 1 mit einem ersten Abschnitt, einem Zwischenabschnitt in variablem Querschnitt und einem haarnadelförmig gebogenen Abschnitt zu fertigen.

## Claims

1. Shaker for a machine for harvesting or collecting fruits or berries by shaking, formed by a shank in plastic material maintained at one of its extremities at least by a coupling linkage with an oscillating support around an axis perpendicular to the plane of the shank, **characterised in that** the shank has an intermediate section (2) with decreasing cross-section, comprised between a first section (1) of constant cross-section able to be inserted into the fixation clip, and a hairpin curved section.

2. Shaker according to claim 1, **characterised in that** the length of the intermediate section (2) is comprised between 10 and 50 centimetres.

3. Shaker according to one or the other of claims 1 or 2 **characterised in that** the cross-section of the intermediate section (2) varies between a maximum cross-section of about 50 millimetres and a minimum cross-section of about 20 millimetres.

4. Shaker for a machine for harvesting or collecting fruits or berries by shaking according to the preceding claim, **characterised in that** the hairpin curved shank is prolonged by a second intermediate section (5) of decreasing cross-section.

5. Mould for manufacturing a shaker for a machine for harvesting or collecting fruits or berries by shaking, with a cavity to form a shaker according to claim 1, with a first section, an intermediate section of variable cross-section and a hairpin curved section.
